# EUROPEAN PATENT SPECIFICATION

(11) **EP 1 845 828 B1**
(45) Date of publication and mention of the grant of the patent: **15.10.2008**
(21) Application number: 04804978.7
(22) Date of filing: 21.12.2004
(51) Int. Cl.: A47J 31/46

(54) **APPARATUS FOR PREPARING A BEVERAGE**
VORRICHTUNG ZUR ZUBEREITUNG EINES GETRÄNKS
APPAREIL DE PREPARATION D'UNE BOISSON

(43) Date of publication of application: 24.10.2007
(73) Proprietor: Inventum Holland B.V., 3903 LH Veenendaal (NL); Electrical & Electronics Ltd., Tai Po, N.T., Hong Kong (CN); Coval Art Tec Limited, Limassol, P.C. 3106 (CY)
(72) Inventor: WEIJERS, Marcel Hendrikus Simon, NL-7908 LH Hoogeveen (NL)
(74) Representative: van Looijengoed, Ferry Antoin Theodorus
(86) International application number: PCT/EP2004/053644
(87) International publication number: WO 2006/066623

(56) References cited:
- EP-A- 0 606 042
- DE-U1- 20 218 339
- FR-A- 2 364 640
- US-A- 5 613 422

## Description

The invention relates to an apparatus for preparing a beverage fit for consumption, such as coffee, tea, chocolate and cappuccino. More specifically, the invention relates to an apparatus for preparing such a beverage according to the preamble of claim 1.

DE 202 18 339 U1 discloses a three-way valve device used in an apparatus for preparing hot, brewed, beverages. The apparatus comprises a boiler connected to a boiler inlet of the valve device, a brewing head connected to a brewing head outlet of the valve device and a water storage tank connected with the boiler and a return flow connecting point of the valve device. A pump device of the apparatus pumps water from the boiler through the valve device to the brewing head for preparing the beverage. The valve device has an internal closure body that either closes the brewing head outlet or the return flow connecting point depending on the status of the pump device.

EP 606 042 discloses a two-way draining valve for coffee making machines that includes an L-shaped housing containing a chamber, an inlet opening for delivering water to the chamber from a pump, an outlet opening arranged in an upper leg of the housing for delivering water from the chamber to a boiler inlet and a draining bore arranged in a lower leg of the housing and communicating with the chamber. A spherical rubber valve ball is arranged within the chamber and is movable with respect to the draining bore in response to changes in pressure in the chamber. The ball valve opens and closes the draining bore in accordance with the chamber pressure to enable excess steam and water from the boiler and the pump, and excess air from the pump to exit the chamber via the draining bore. Thus, pressure within the boiler is controlled to prevent dripping of the coffee making machine.

FR 2 364 640 discloses a valve device comprising a water inlet for receiving water and water outlets for a heating device and a decompression chamber.

US 5,613,422 discloses an espresso coffee maker with a heat exchanger, a coffee dispenser unit and a water supply system in conjunction with the heat exchanger for supplying heated water to the coffee dispenser unit. The water supply system feeds cold water to the heat exchanger and heated water is delivered to the dispenser unit. A heated water return pipe is connected to the heat exchanger from the dispenser unit to form a recirculation circuit between the heat exchanger and the dispenser unit through which the heated water flows by natural convection to transfer heat from the heat exchanger to the dispenser unit. The water supply system includes at least one heat operated control valve incorporated in the recirculation circuit. The valve is provided with a chamber and a shutter is movable in the chamber to control the circulation of the water. A bias element made of a shape-memory material urges the shutter towards a normal position throttling down the transfer port when the temperature of the water through the recirculation circuit is above the transition temperature of the shape-memory material.

A disadvantage of the prior art apparatus is the calcification of the valve device that eventually results in malfunctioning of the valve device or the apparatus.

It is an object of the invention to provide an apparatus for brewing beverages that is less prone to calcification of the valve device.

This object is accomplished by providing an apparatus for preparing a beverage in accordance with the characterizing portion of claim 1.

The inventor has realised that heated water is likely to contain calcium. By rearranging the various components of the apparatus such that the valve device is at least partly arranged in the cold water circuit of the apparatus, the deposit of calcium in the valve device is reduced or eliminated. The four-way valve device is arranged at least partly in the cold water circuit of the system. Moreover, the provision of a separate outlet for the unheated water and inlet for exhaust fluids of the heating device results in an improved thermal behaviour of the heating device.

The embodiment of the invention as defined in claim 2 has the advantage of easy transfer of the liquid through the apparatus.

The embodiment of the invention as defined in claims 3-5 and 10-12 has the advantage of a simple mechanical valve system that operates without further dedicated control means.

The embodiment of the invention as defined in claims 6 and 7 has the advantage of maintaining the liquid channels of the apparatus substantially free of air and efficient usage of the liquid.

The embodiment of the invention as defined in claim 8 has the advantage of a compact apparatus for preparing beverages.

The invention will be further illustrated with reference to the attached drawings, which schematically show a preferred embodiment according to the invention. It will be understood that the invention is not in any way restricted to this specific and preferred embodiment.

In the drawings:
Fig. 1 is a schematic illustration of an apparatus according to an embodiment of the invention;
Fig. 2 shows a three-dimensional representation of a valve device for the apparatus of Fig. 1 according to an embodiment of the invention;
Fig. 3 shows a cross-section III-III of the valve device depicted in Fig. 2;
Fig. 4 shows an exploded view of the valve device of Fig. 2;
Fig. 5 illustrates the valve device of Fig. 2 in a first mode of operation according to an embodiment of the invention, and
Fig. 6 illustrates the valve device of Fig. 2 in a second mode of operation according to an embodiment of the invention.

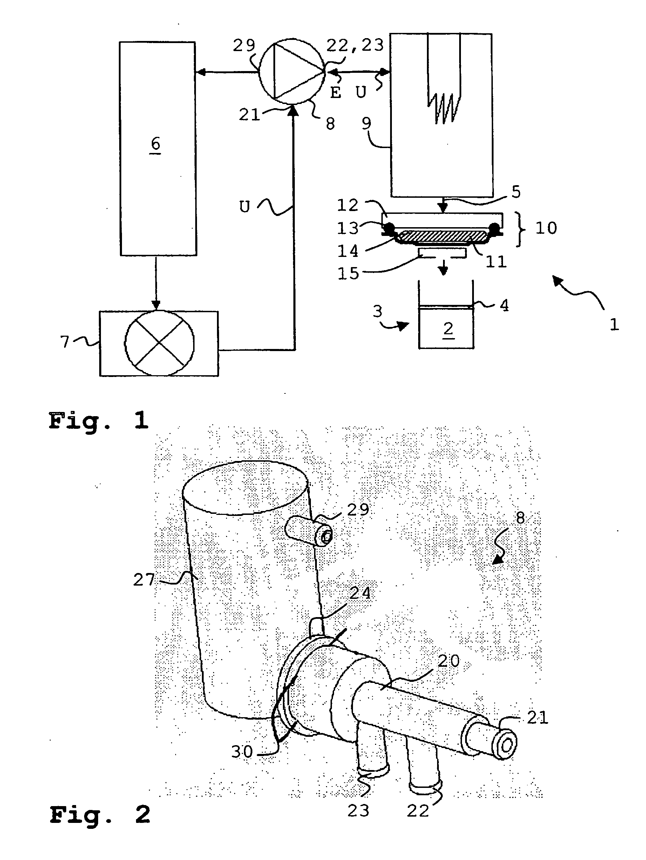

Fig. 1 is a schematic illustration of an apparatus 1 for preparing a beverage 2 suitable for consumption in a cup 3 with a fine-bubble froth layer 4. The apparatus 1 is capable of producing beverages 2, such as coffee, tea, chocolate or cappuccino, in a predetermined volume, typically one or two cups. The apparatus comprises a liquid inlet 5 in fluid communication with a liquid storage tank 6, hereinafter referred to as water container 6, for fresh water for the preparation of the beverage 2, a pump device 7 in fluid communication with the water container 6, a valve device 8 in fluid communication with the pump 7 and a heating device 9. Connecting points 21, 22 and 23 and overflow 29 will be described below in more detail. The heating device 9 provides heated water into a brew chamber 10. The brew chamber 10 involves the volume available for a container 11 with a filter, also referred to as pad, pod or pouch, pre-packed with a soluble or extractable product to obtain the brewed beverage 2 after the pressurized liquid has passed through the product. The brew chamber 10 has a brew chamber lid 12, a closing seal 13 and a holder 14 enclosing the container 11. The apparatus 1 has a frothing device 15 for providing the fine-bubble froth layer 4 for the beverage 2.

In operation, unheated water U from the water container 6 is fed to the pump 7 to inject the unheated water under pressure via the valve device 8 into the heating device 9. Accordingly, mainly unheated water is fed through the valve device 8, thereby reducing the chance of calcium deposit in the valve device 8. Heating of the water is only performed after passing of the water through the valve device 8. The heating device 10 may e.g. be a boiler. The pressure from the pump for the liquid is in the range of 1.2-3 bar, preferably 1.4 - 2.5 bar. In the heating device 9, the water is heated till it has a temperature just below the boiling point. Expansion water during heating may be fed through the valve device 8 back into the water container 6. Subsequently, the heated and pressurized water is provided via the inlet 5 into the brew chamber 10 where it passes through the container 11 to obtain the brewed beverage. After passing through the container 11, the flow passes the frothing device 15 that adds the fine-bubble froth layer 4 to the beverage 2 in the cup 3.

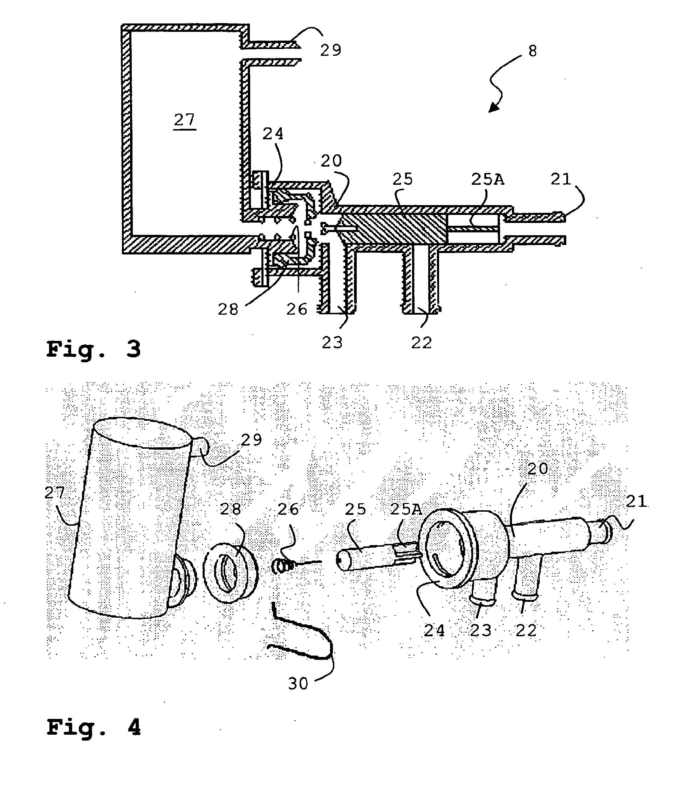

Figs. 2-4 illustrate the valve device according to the invention in more detail.

The valve device 8 comprises a valve device housing 20. The housing 20 determines a first inlet 21 for receiving unheated water from the pump 7, a first outlet 22 for providing said unheated water to said heating device 9, a second inlet 23 for receiving exhaust fluid from said heating device 9 and a second outlet 24 for said exhaust fluid. Although the outlet 22 and inlet 23 can be combined, it has been observed that the provision of a separate outlet 22 for the unheated water and inlet 23 for exhaust fluid of the heating device 9 results in an improved thermal behaviour of the heating device 9. The mixture of unheated and heated fluids when a single connecting point is used decreases the temperature of the beverage 2

The housing 20 accommodates a closure body or plunger 25 with wings 25A movably arranged in the housing 20 and connected to a spring member 26. Wings 25A guide the closure body 25 to ensure that the first outlet 22 does not obstruct the motion of the closure body 25. Motion of the closure body 25 involves a translation of this body. The spring force of the spring member 26 is predetermined to achieve that pump action of the pump 7 may move the closure body 25 in the housing 20 against the spring force action of the spring member 26. The second outlet 24 is further connected to a buffer reservoir 27 using a seal 28, preferably manufactured of silicon. The buffer reservoir 27 has an overflow outlet 29 to feed water back into the water container 6. This buffer reservoir 27 is especially preferably for a brew chamber lid 12 embodied as a flexible piston, such as a silicon piston, provided with a valve system as is described in a co-pending application ("Apparatus for preparing a beverage") of the applicants filed at the same date as the present application. The valve device 8 may be constructed such that the buffer reservoir 27 surrounds the remaining parts of the valve device 8. Finally a wire spring 30 is provided to connect the housing 20 and the buffer reservoir 27. It is noted that other connecting means, such as snapping hooks, may be used as well.

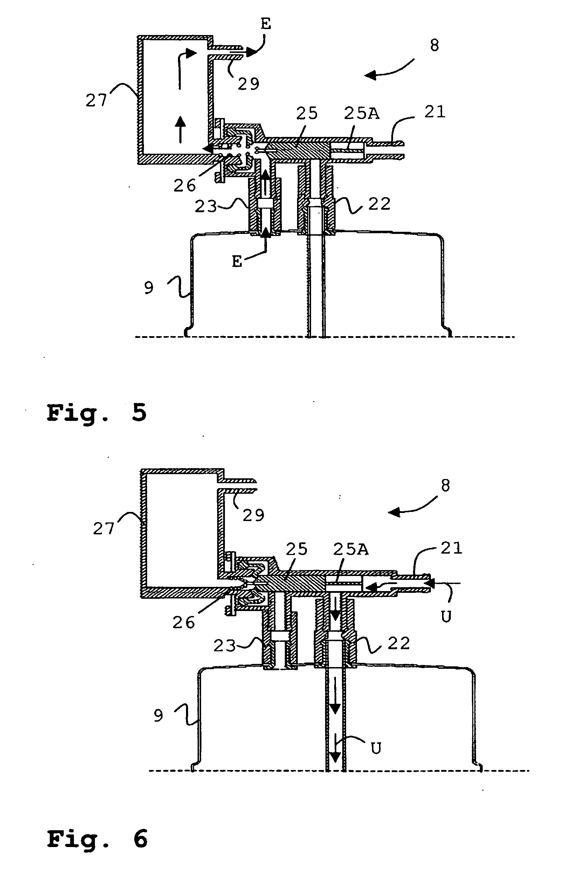

Figs. 5 and 6 illustrate the operation of the apparatus 1, more particularly the valve device 8. The valve device 8 is integrated with the heating device 9.

It is assumed that the boiler 9 is completely filled with water. First operation of the apparatus 1 would normally require the user to first fill the apparatus 1 with water. If additional water is required, a signal will warn the user that water should be added in the water container 6.

When the apparatus is switched on, the state of the valve device 8 is as shown in Fig. 5. The heating device 9 warms the available water, while the pump 7 is inactive. Accordingly, the spring member 26 is in a substantially unloaded state, i.e. the spring member 26 balances the force exerted on the closure body 25 by the water present on the other side of the closure body 25 in the first inlet to hold the closure body in a first position. To better determine this first position, the valve device 8 may have a structure accurately defining the position of the closure body 25 in the first position. In this state, the closure body 25 prevents unheated water to enter the heating device 9. In the embodiment of Figs. 5 and 6, this is done by closing the first outlet 22 for unheated water. The internal resistance of the pump 7 may be such that water from the container 6 is not likely to pass the pump 7.

During the heating process exhaust fluid, indicated by E, is generated. This exhaust fluid E may include expansion water from the heating device 9 and gasses. The exhaust fluid E flows through the second inlet 23 and the second outlet 24 of the valve device 8 to the buffer reservoir 27. The first position of the closure member 25 provides an open connection or flow path from the boiler 6 to the buffer reservoir 27 for escaping exhaust fluid. If the buffer reservoir 27 is full, excess water is fed via the overflow outlet 29 back into the water container 6. Ultimately, when the heating device 9 cools down, water present in the buffer reservoir 27 will flow back into the boiler 9, thereby preventing air being sucked into the heating device 9.

Subsequently, as illustrated in Fig. 6, the pump 7 is activated. In switching on of the apparatus 1, the user may choose whether he desires e.g. one or two cups 3 of coffee. This activation results in the closure body 25 to move against the spring force action of the spring member 26 to a second position. The closure body 25 compresses the silicon seal 28. In this second position, the unheated water, indicated by U, is allowed to flow via the first inlet 21 and first outlet 22 of the valve device 8 into the heating device 9. Accordingly, the portion of the valve device 8 between the first inlet 21 and the first outlet 22 constitutes a part of the cold water circuit of the apparatus 1 and chances on calcium deposition in the valve system are reduced. Previously heated water is fed to the inlet 5 of the brewing chamber 10 to prepare the beverage 2 with the froth layer 4. Further, the connection for the exhaust fluid E is hermetically closed. Accordingly, an isolated system is obtained to maintain appropriate conditions for the brewing the beverage.

The second position of the closure body 25 is maintained until the pump 7 is deactivated after a certain time interval. When the pump is deactivated, the pressure in the apparatus 1 will gradually drop. At a certain moment, the spring force action of the spring member 26 will exceed the pressure on the other side of the closure body 25 and the closure member 25 will return to the first position, indicated in Fig. 5. The remaining pressure is released through the second inlet 23 and second outlet 24 such that after-dripping of the apparatus 1 at the frothing device 15 is significantly diminished.

It should be acknowledged that the present invention is not limited to the above-described embodiment as the closure of the connecting points 21, 22, 23 and 24 of the valve device 8 may e.g. be achieved by separate closure means for each connecting point. These closure means may e.g. be controlled independently from the pressure of the pump 7, e.g. by a control unit.

## Claims

1. An apparatus (1) for preparing a beverage (2) comprising a liquid storage tank (6), a valve device (8) and a heating device (9), wherein said valve device is arranged to receive unheated liquid (U) from said liquid storage tank and to provide said unheated liquid to said heating device to obtain heated liquid for preparing said beverage
**characterized in that**
said valve device (8) comprises a first inlet (21) for receiving said unheated liquid (U), a first outlet (22) for providing said unheated liquid to said heating device (9), a second inlet (23) for receiving exhaust fluid (E) from said heating device and a second outlet (24) for said exhaust fluid.

2. The apparatus (1) according to claim 1, wherein said apparatus further comprises a pump (7) and wherein said pump is arranged to pump said unheated liquid (U) towards said valve device.

3. The apparatus (1) according to claim 1 or 2, wherein said valve device (8) comprises a mobable closure body (25) arranged to move between a first position wherein said closure body closes at least one of said first inlet (21) and said first outlet (22) and a second position wherein said closure body opens said closed first inlet and/or outlet.

4. The apparatus (1) according to claim 3, wherein said closure body (25) is further arranged to close said second inlet (23) in said second position.

5. The apparatus (1) according to claim 3 or 4, wherein said valve device (8) comprises a spring member (26) arranged to hold said closure body (25) in said first position in a substantially unloaded state of said spring member.

6. The apparatus (1) according to one or more of the preceding claims, wherein said apparatus has a buffer reservoir (27), preferably integrated with said valve device (8), for receiving exhaust fluid (8) from said heating device (9).

7. The apparatus (1) according to claim 6, wherein said buffer reservoir (27) is arranged in fluid communication with said liquid storage tank (6).

8. The apparatus (1) according to one or more of the preceding claims, wherein said valve device (8) is integrated with said heating device (9).

## Patentansprüche

1. Vorrichtung (1) zum Bereitstellen eines Getränks (2), aufweisend einen Flüssigkeitsvorratsbehälter (6), eine Ventilvorrichtung (8) und eine Heizvorrichtung (9), wobei die Ventilvorrichtung angeordnet ist, um unerhitzte Flüssigkeit (U) aus dem Flüssigkeitsvorratsbehälter aufzunehmen und die unerhitzte Flüssigkeit zu der Heizvorrichtung zu liefern, um erhitzte Flüssigkeit zum Bereitstellen des Getränks zu erzielen, **dadurch gekennzeichnet, dass** die Ventilvorrichtung (8) einen ersten Einlass (21) zum Aufnehmen der unerhitzten Flüssigkeit (U), einen ersten Auslass (22) zum Liefern der unerhitzten Flüssigkeit zu der Heizvorrichtung (9), einen zweiten Einlass (23) zum Aufnehmen von Auslassfluid (E) von der Heizvorrichtung, und einen zweiten Auslass (24) für das Auslassfluid aufweist.

2. Vorrichtung (1) nach Anspruch 1, wobei die Vorrichtung ferner eine Pumpe (7) aufweist, und wobei die Pumpe angeordnet ist, um die unerhitzte Flüssigkeit (U) in Richtung zu der Ventilvorrichtung zu pumpen.

3. Vorrichtung (1) nach Anspruch 1 oder 2, wobei die Ventilvorrichtung (3) einen bewegbaren Schließkörper (25) aufweist, der angeordnet ist, um sich zwischen einer ersten Position, In weicher der Schließkörper wenigstens einen von dem ersten Einlass (21) und dem ersten Auslass (22) schließt, und einer zweiten Position zu bewegen, in welcher der Schließkörper den geschlossenen ersten Einlass und/oder Auslass öffnet.

4. Vorrichtung (1) nach Anspruch 3, wobei der Schließkörper (25) ferner angeordnet ist, um den zweiten Einlass (23) in der zweiten Position zu schließen.

5. Vorrichtung (1) nach Anspruch 3 oder 4, wobei die Ventilvorrichtung (8) ein Federelement (26) aufweist, das angeordnet ist, um den Schließkörper (25) in der ersten Position in einem im Wesentlichen unbelasteten Zustand des Federelements zu halten.

6. Vorrichtung (1) nach einem oder mehreren der vorhergehenden Ansprüche, wobei die Vorrichtung einen vorzugsweise in die Ventilvorrichtung (8) integrierten Pufferspeicher (27) zum Aufnehmen von Auslassfluid (E) aus der Heizvorrichtung (9) aufweist.

7. Vorrichtung (1) nach Anspruch 6, wobei der Pufferspeicher (27) in Fluidverbindung mit dem Flüssigkeitsvorratsbehälter (6) angeordnet ist.

8. Vorrichtung (1) nach einem oder mehreren der vorhergehenden Ansprüche, wobei die Ventilvorrichtung (8) in die Heizvorrichtung (9) integriert ist.

## Revendications

1. Appareil (1) de préparation d'une boisson (2) comprenant un réservoir de stockage de liquide (6), un dispositif de soupape(8) et un dispositif chauffant (9), dans lequel ledit dispositif de soupape est agencé de manière à recevoir un liquide non chauffé (U) depuis ledit réservoir de stockage de liquide et à acheminer ledit liquide non chauffé vers ledit dispositif chauffant pour obtenir du liquide chauffé pour préparer ladite boisson, **caractérisé en ce que**
ledit dispositif due soupape (8) comprend une première entrée (21) pour recevoir ledit liquide non chauffé (U), une première sortie (22) pour acheminer ledit liquide non chauffé vers ledit dispositif chauffant (9), une seconde entrée (23) pour recevoir du fluide évacué (E) depuis ledit dispositif chauffant et une seconde sortie (24) pour ledit fluide évacué.

2. Appareil(1) selon la revendication 1, dans lequel ledit appareil comprend en outre une pompe (7) et dans lequel ladite pompe est agencée de manière à pomper ledit liquide non chauffé (U) vers ledit dispositif de soupape.

3. Appareil (1) selon la revendication 1 ou 2,
dans lequel ledit dispositif de soupape (8) comprend un corps de fermeture mobile (25) agencé de manière à se déplacer entre une première position dans laquelle ledit corps de fermeture ferme au moins un d'entre ladite première entrée (21) et ladite première sortie (22), et une seconde position dans laquelle ledit corps de fermeture ouvre ladite première entrée et/ou, sortie fermée.

4. Appareil (1) selon la revendication 3, dans lequel ledit corps de fermeture (25) est en outre agencé de manière à fermer ladite seconde entrée (23) dans ladite seconde position.

5. Appareil (1) selon la revendication 3 ou 4,
dans lequel ledit dispositif de soupape (8) comprend un élément à ressort (26) agencé de manière à retenir ledit corps de fermeture (25) dans ladite première position, dans un état sensiblement non chargé dudit élément à ressort.

6. Appareil (1) selon une ou plusieurs des revendications précédentes, dans lequel ledit appareil a un réservoir tampon (27), de préférence intégré au dit dispositif de soupape (8) pour recevoir du fluide évacué (E) depuis ledit dispositif chauffant (9).

7. Appareil (1) selon la revendication 6, dans lequel ledit réservoir tampon (27) est agencé en communication fluidique avec ledit réservoir de stockage (6).

8. Appareil (1) selon une ou plusieurs des revendications précédentes, dans lequel ledit dispositif de soupape (8) est intégré audit dispositif chauffant (9).
